Europäisches Patentamt

European Patent Office

Office européen des brevets

(19)

(11) Veröffentlichungsnummer: **0 065 209**
**A1**

# (12) EUROPÄISCHE PATENTANMELDUNG

(21) Anmeldenummer: **82103857.7**

(22) Anmeldetag: **05.05.82**

(51) Int. Cl.³: **D 06 F 39/02**

(30) Priorität: **13.05.81 DE 3118973**

(43) Veröffentlichungstag der Anmeldung: **24.11.82**
**Patentblatt 82/47**

(84) Benannte Vertragsstaaten: **AT BE CH DE FR GB IT LI LU NL SE**

(71) Anmelder: **LANG APPARATEBAU GMBH,**
**Raiffeissenstrasse 7, D-8221 Siegsdorf Obb. (DE)**

(72) Erfinder: **Saalmann, Günter, Birkenstrasse 50,**
**D-5820 Gevelsberg (DE)**
Erfinder: **Haslberger, Richard, Waginger Strasse 18,**
**D-8221 Hallabruck (DE)**

(74) Vertreter: **Bornemann, Dieter, Dipl.-Ing., c/o Henkel**
**Kommanditgesellschaft auf Aktien - Patentabteilung -**
**Postfach 1100 Henkelstrasse 67, D-4000 Düsseldorf (DE)**

(54) **Dosierverfahren zum Versorgen einer Waschmaschine mit Waschmittelkonzentrat und Vorrichtung zum Durchführen des Verfahrens.**

(57) Das Dosierverfahren zum Versorgen von Waschanlagen (17) mit in Wasser löslichem oder unlöslichem Waschmittelkonzentrat (1) soll im Hinblick auf das Vermeiden von Staubentwicklung, eines Verklumpens oder Zusammenbackens sowie einer Verkrustung der Gefäßwände und ferner auf ein Anpassen des Waschmittelbedarfs an unterschiedlichem Verschmutzungsgrad ausgebildet werden. Die Lösung besteht darin, daß Waschmittelkonzentrat (1) aus einem flexiblen Liefergebinde (2) in ein Dosiergerät (7) gefördert, dort durch Zugabe von Wasser in ein pumpfähiges Gemisch umgewandelt und abhängig vom Soll-Wert der Konzentration der Gebrauchslösung (18) in der Waschanlage (17) mittels einer Pumpe (15) in die Anlage gefördert wird.

P a t e n t a n m e l d u n g
D 6329 EP

"Dosierverfahren zum Versorgen einer Waschmaschine mit
  Waschmittelkonzentrat und Vorrichtung zum Durchführen
  des Verfahrens"

Die Erfindung betrifft ein Dosierverfahren zum Versorgen einer Waschmaschine bzw. -anlage mit in Wasser löslichem oder unlöslichem pulver- oder granulatförmigem Waschmittelkonzentrat aus einem Liefergebilde mit Hilfe eines mit Wasser als Transport- und Lösungsmittel arbeitenden, angetriebenen Dosiergerät mit Vorratsbehälter. Sie betrifft ferner eine Einrichtung zum Durchführen des Dosierverfahrens. Vorzugsweise dienen Vorrichtung und Verfahren zum Versorgen einer gewerblichen Waschmaschine bzw. -anlage. Die Begriffe "Waschmaschine" und "Waschmittel" sind dabei im allgemeinen Sinne zu verstehen und umfassen auch Spül- und Reinigungsmaschinen bzw. Spül- und Reinigungsmittel.

Bei Dosierverfahren erfolgt derzeit das Befüllen des Vorratsbehälters des jeweiligen Dosiergeräts von Hand unmittelbar aus dem Liefergebilde heraus. Die Dosiergeräte werden dabei elektrisch oder pneumatisch angetrieben und arbeiten mit Wasser als Transport- und/oder Lösungsmittel des Waschmittels. Letzteres wird bei anderen Einrichtungen zeitabhängig von Hand dosiert. Bei einer weiteren Maschine erfolgt das Dosieren durch Ansteuern über einen Leitfähigkeitsregler. Das Pulver oder Granulat rieselt dabei während des Dosierens kon-

0065209

D 6329 EP                    2

tinuierlich zum Vermischen mit Wasser in einen Einspültrichter und fließt aus diesem unter Falldruck in die
zu versorgende Waschanlage bzw. -maschine (vgl. DE-PS
15 42 298). Weiterhin gibt es Einrichtungen, bei denen
das Ansteuern zeitabhängig erfolgt und eine vorgegebene
abgewogene Waschmittelmenge mit Wasser versetzt sowie
über eine Pumpe in die Waschmaschine gefördert wird.
Schließlich werden derzeit Dosiergeräte verwendet, bei
denen das Waschmittel direkt aus dem zugehörigen Vorratsbehälter mit Wasser ausgespült und das entstehende
Gemisch mit Hilfe einer Pumpe oder unter Falldruck weiterzufördern ist.

Nachteilig an den bekannten Waschmitteldosierverfahren
bzw. -einrichtungen ist in den meisten Fällen die starke
Staubentwicklung beim Befüllen des Vorratsbehälters am
Dosiergerät. Ferner ist das hygroskopische Waschmittel
beim offenen Transport der hohen Luftfeuchtigkeit der Umgebung ausgesetzt, was zum Verklumpen und Zusammenbacken
führen kann. Außerdem stellt das Heben und Transportieren
der beim Betrieb gewerblicher Waschmaschinen relativ
schweren Liefergebinde (z.B. Papiersäcke von ca. 25 kg)
eine erhebliche körperliche Belastung des Bedienungspersonals dar, das gilt vor allem bei Großverbrauchern mit
einem Tagesbedarf von einigen 100 kg Waschmittel. Bei
bisher verwendeten Geräten mit zeitabhängiger Dosierung,
bei denen also eine Rückmeldung der Gebrauchskonzentration nicht stattfindet, wird ein entsprechend dem Verschmutzungsgrad erhöhter oder verminderter Waschmittelbedarf nicht berücksichtigt. Das Ausspülen des Waschmittels aus den Vorratsbehältern mit Wasser führt häufig zu

D 6329 EP                    3

Klumpenbildung und Verkrustung, wodurch die Förderung des Gemisches erschwert oder verhindert werden kann.

Der Erfindung liegt die Aufgabe zugrunde, das Verfahren eingangs genannter Art so zu verbessern und auszubauen, daß eine Staubentwicklung sowie ein Verklumpen oder Zusammenbacken des Waschmittels bzw. ein Verkrusten der Gefäße im wesentlichen vermieden und die körperliche Arbeit, insbesondere beim Heranführen und Austauschen der Liefergebinde, durch den Einsatz von Maschinen erleichtert werden kann sowie die Geschwindigkeit der Waschmittelzufuhr zur Waschanlage dem Verschmutzungsgrad der zu reinigenden Teile, insbesondere Textilien, anzupassen ist. Die erfindungsgemäße Lösung besteht für das Dosierverfahren darin, daß das Waschmittelkonzentrat selbsttätig staubfrei aus dem Liefergebinde in den Vorratsbehälter des Dosiergeräts gefördert, dort durch Zugabe von Wasser als Transport- und/oder Lösungsmedium in einem festen Mengenverhältnis in ein pumpfähiges Gemisch umgewandelt und abhängig vom Sollwert der elektrisch gemessenen Gebrauchskonzentration in der Waschanlage mit Hilfe einer Pumpe in die Anlage gefördert wird. Vorzugsweise soll dabei das Waschmittelkonzentrat über einen rohr- bzw. schlauchförmigen, insbesondere verschließbaren, Kanal als Schüttöffnung aus dem Liefergebinde in den Vorratsbehälter, insbesondere unter dem Falldruck, gefördert werden.

Die Erfindung betrifft demgemäß ein Dosierverfahren mittels dessen pulver- oder granulatförmiges Waschmittelkonzentrat aus dem Liefergebinde in ein Pulverdosiergerät gelangt, dort unter, vorzugsweise geregelter, Zugabe vom Wasser als Transport- und/oder Lösungsmittel in einem festen Mengenverhältnis in ein pumpfähiges Gemisch umgewandelt und abhängig vom Sollwert der elektrisch gemessenen Gebrauchskonzentration in der Waschanlage - gegebenenfalls zumindest teilweise im Transportmedium gelöst - mittels einer Pumpe in die Waschanlage gefördert wird. Eine Einrichtung zum Durchführen des Verfahrens ist gemäß weiterer Erfindung gekennzeichnet durch die Anordnung, insbesondere Aufhängung, eines das pulver- oder granulatförmige Waschmittelkonzentrat enthaltenden, vorzugsweise flexiblen, Liefergebindes oberhalb des Vorratsbehälters des Dosiergeräts und die Verbindung des Liefergebindes mit dem Vorratsbehälter über eine flexible, verschließbare, insbesondere zusammenzuschnürende, Schüttöffnung mit Durchlaßkanal zwischen dem Boden des Liefergebindes und dem Kopf des Vorratsbehälters.

Mit Hilfe des Verfahrens und der Vorrichtung zum Durchführen des Verfahrens gelingt es, den Waschmittelnachschub zu einer Waschanlage, beispielsweise einer gewerblichen Waschmaschine, bei staubfreiem Zuführen und ohne wesentliche Gefahr des Verklumpens bzw. Zusammenbackens oder Verkrustens der Gefäßwände den Waschmittelbedarf der jeweiligen Verschmutzung anzupassen. Insbesondere bei Verwendung eines Liefergebindes mit am Boden vorgesehener Öffnung zu einem zum Vorratsbehälter des Dosiergeräts führenden Kanal und einer Aufhängung für das Liefergebinde, können körperliche Anstrengungen beim

0065209

D 6329 EP                     5

Nachfüllen durch den Einsatz von Hebegeräten, wie Gabelstaplern, im wesentlichen erspart werden.

Zu den erfindungsgemäß zu dosierenden Waschmittelkonzentraten gehören lösliche und unlösliche Produkte einschließlich solcher Waschmittel bzw. Waschhilfsmittel,
z.B. Perborat, die wegen ihrer chemischen Reaktion nicht
über Stammlösungen flüssig dosiert werden.

D 6329 EP                6

Weitere Einzelheiten und Vorteile der Erfindung werden anhand des beiliegenden Schema- und Funktionsbildes erläutert.

Das pulver- oder granulatförmige Waschmittel 1 wird in einem Liefergebinde 2 vorgelegt. Seine Füllmenge kann mehrere 100 kg betragen. Das Liefergebinde kann aus flexiblem Material, wie kunststoffbeschichteten Gewebebahnen oder aus Papier, gefertigt sein und eine normalerweise oben liegende, verschließbare Befüllöffnung 3 sowie eine unten liegende, flexible, durch Abschnüren eines angesetzten oder angeformten Schlauchkanals zu verschließende Schüttöffnung 4 besitzen. Es kann eine vieleckige oder runde Grundrißform des Liefergebindes 2 vorgesehen sein.

Bei Anwendung wird das gefüllte Liefergebinde 2 z.B. mittels seiner auf der Oberseite angesetzten Laschen 5 an einem Tragrahmen 6 befestigt und oberhalb des insgesamt mit 7 bezeichneten Dosiergeräts in einer Halterung 8 positioniert. Das Liefergebinde 2 kann mit Hilfe eines Gabelstaplers oder Kettenzugs mit Laufschiene an den vorgesehenen Ort oberhalb des Dosiergeräts 7 am Tragrahmen 6 bzw. in der Halterung 8 aufgehängt werden.

Das Befüllen des am Dosiergerät 7 vorgesehenen Vorratsbehälters 9 erfolgt über die Schüttöffnung 4 und deren Schlauchkanal 10. Letzterer kann in der mit gestrichelten Linien angedeuteten Weise durch Zusammenschnüren verschließbar ausgebildet sein. Das Nachfließen des Pulvers oder Granulats 1 aus dem Liefergebinde 2 hört von selbst
auf, wenn der Schüttkegel 11 die gesamte Querschnittfläche der Öffnung des Schlauchkanals 10 ausfüllt, und
beginnt wieder, wenn Waschmittel 1 aus dem Vorratsbehälter 9 entnommen und die Öffnung des Kanals 10 dementsprechend frei wird.

Während des Dosierens, d.h. nach Einschalten des Antriebs des Dosiergeräts 7, rieselt das Waschmittel 1
im Ausführungsbeispiel kontinuierlich über einen rotierenden Streuteller 12 in einen Einspültrichter 13, wo
es durch Zugabe von Wasser über einen Wasserzulauf 14
zu einem pumpfähigen Gemisch aufbereitet wird. Das Gemisch ist mit Hilfe der Pumpe 15 in den Waschtank 16
der Waschanlage 17 zu fördern.

Die Waschmittelkonzentration der Gebrauchslösung 18 im
Waschtank 16 wird im Ausführungsbeispiel von einer Meßsonde 19 in ein elektrisches Signal umgewandelt und an
eine elektronische Regelung 20 übermittelt. Die Regelung
20 soll vorzugsweise mehrere voreinstellbare Programme
enthalten. Fällt der Ist-Wert der Waschmittelkonzentration unter den im jeweiligen Programm der elektronischen
Regelung 20 vorgegebenen Soll-Wert, so dosiert das entsprechend über die Leitung 21 beaufschlagte Dosiergerät 7
selbsttätig so lange, bis dieser Soll-Wert erreicht ist
und schaltet ab. Über die Leitung 21 werden den Erfordernissen entsprechend alle zu steuernden Teile, z.B. der
Streuteller 12, die Pumpe 15 und evtl. das Vorratsgefäß
9, von der Regelung 20 beaufschlagt. Letzterer können von

D 6329 EP                    8

der Waschanlage 17 über die Leitung 22 je nach Reinigungsverfahren unterschiedliche Konzentrations-Soll-Werte vorgegeben werden.

In Verbindung mit dem Dosiergerät 7 und bei Verwendung eines flexiblen, eine unten liegende Schüttöffnung 4 besitzenden Liefergebindes 2 kann direkt aus dem letzteren schüttend dosiert werden. Das Volumen des Liefergebindes 2 kann dabei ein Mehrfaches des Volumens des Vorratsbehälters 9 am Dosiergerät 7 umfassen. Die Flexibilität des Liefergebindes 2 gewährleistet bei entsprechender Gestaltung ein restloses Entleeren, ohne daß das Schüttgut mechanisch beaufschlagt werden müßte. Durch den sich an die Schüttöffnung 4 anschließenden Schlauchkanal 10 sowie durch eine im Durchmesser angepaßte Füllöffnung im Vorratsbehälter 9 des Dosiergerätes 7 wird eine Staubentwicklung in der Umgebung der Einrichtung verhindert. Dieser Staubschutz stellt zugleich eine Dichtung gegen das Eindringen von (feuchter) Luft in das Innere von Liefergebinde, Schlauchkanal oder Vorratsbehälter dar. Eine vorzeitige Feuchtigkeitsaufnahme des Waschmittels ist daher im wesentlichen ausgeschlossen. Nach Abschnüren des flexiblen Schlauchkanals 10 an der Grenze zur Schüttöffnung 4 kann das Liefergebinde2 vom Dosiergerät 9 getrennt werden. Das Liefergebinde 2 ist dann luftdicht verschlossen.

Bei Verwendung eines Tragrahmens 6 zum Aufhängen des Liefergebindes 2 wird die Möglichkeit geschaffen, das Gebinde mittels eines Gabelstaplers oder Kettenzugs mit

D 6329 EP                    9

Laufschiene zu bewegen sowie anzuheben und auf diese
Weise das Bedienungspersonal von schwerer körperlicher
Arbeit zu entlasten. Großvolumig ausgelegte flexible
Liefergebinde können als wiederverwendbare Behälter nach
dem Entleeren platzsparend zum Neubefüllen an den Waschmittelhersteller zurückgesandt werden.

Durch das kontinuierliche Messen der Konzentration der
Gebrauchslösung 18 wird der tatsächliche, augenblickliche Bedarf an neuem Waschmittel festgestellt. Ein
Dosieren erfolgt erfindungsgemäß nur bei vorherigem
Unterschreiten des jeweils vorgegebenen Soll-Wertes
der Konzentration der Gebrauchslösung. Der Waschmittelverbrauch steht somit in direktem Zusammenhang mit dem
Verschmutzungsgrad der zu reinigenden Teile oder Textilien.

Bezugszeichenliste

 1 = Waschmittel
 2 = Liefergebinde
 3 = Befüllöffnung
 4 = Schüttöffnung
 5 = Laschen
 6 = Tragrahmen
 7 = Dosiergerät
 8 = Halterung
 9 = Vorratsbehälter
10 = Schlauchkanal
11 = Schüttkegel
12 = Streuteller
13 = Einspültrichter
14 = Wasserzulauf
15 = Pumpe
16 = Waschtank
17 = Waschanlage
18 = Gebrauchslösung
19 = Meßsonde
20 = elektronische Regelung
21 = Leitung
22 = Leitung

P a t e n t a n s p r ü c h e

1. Dosierverfahren zum Versorgen einer Waschmaschine bzw.
-anlage mit in Wasser löslichem oder unlöslichem pulver- oder granulatförmigem Waschmittelkonzentrat aus
einem Liefergebinde (2) mit Hilfe eines mit Wasser als
Transport- und Lösungsmittel arbeitenden, angetriebenen
Dosiergeräts (7) mit Vorratsbehälter (9), dadurch gekennzeichnet, daß das Waschmittelkonzentrat staubfrei
aus dem Liefergebinde (2) in den Vorratsbehälter (9)
des Dosiergeräts (7) gefördert, dort durch Zugabe (14)
von Wasser als Transport- und Lösungsmedium in einem
festen Mengenverhältnis in ein pumpenfähiges Gemisch
umgewandelt und abhängig vom Sollwert der elektrisch
gemessenen (19) Gebrauchskonzentration in der Waschanlage (17) mit Hilfe einer Pumpe (15) in die Anlage gefördert wird.

2. Verfahren nach Anspruch 1, dadurch gekennzeichnet,
daß das Waschmittelkonzentrat über einen rohr- bzw.
schlauchförmigen, verschließbaren Kanal als Schüttöffnung (10) aus dem Liefergebinde (2) in den Vorratsbehälter (9) des Dosiergerätes (7), insbesondere im
freien Fall, gefördert wird.

3. Einrichtung zum Versorgen einer Waschmaschine bzw.
-anlage mit in Wasser löslichem, pulver- oder granulatförmigem Waschmittelkonzentrat aus einem Liefergebinde
(2) mit Hilfe eines mit Wasser als Transport- und Lösungsmittel arbeitenden, angetriebenen Dosiergeräts (7) mit Vorratsbehälter (9), insbesondere zum Durchführen des Verfahrens nach Anspruch 1 oder 2, gekennzeichnet durch die Anordnung, insbesondere Aufhängung eines das pulver- oder granulatförmige Waschmittelkonzentrat enthaltenden Liefergebindes (2) oberhalb des Vorratsbehälters (9) des Dosiergeräts (7) und die Verbindung des Liefergebindes (2) mit dem Vorratsbehälter (9) durch eine flexible, verschließbare, insbesondere zusammenzuschnürende, Schüttöffnung (10) mit Durchgangskanal zwischen dem Boden des Liefergebindes (2) und dem Kopf des Vorratsbehälters (9).

4. Vorrichtung nach Anspruch 3, gekennzeichnet durch einen beim Dosieren zu rotierenden Streuteller (12) unterhalb einer Bodenöffnung des Dosiergerätes (7) und einen unterhalb des Streutellers (12) angeordneten Einspültrichter (13) mit Wasserzulauf (14) zum Bilden eines pumpfähigen Gemischs.

5. Vorrichtung nach Anspruch 3 oder 4, gekennzeichnet durch eine elektronische, vorzugsweise vorwählbare Sollwert-Programme enthaltende, Regelung (20) mit Meßsonde (19) zum Prüfen der Waschmittelkonzentration der Gebrauchslösung (18) im Waschtank (16) der zu versorgenden Waschanlage (17) und eine von der Regelung (20) gesteuerte Pumpe (15) zum Fördern des Waschmittel-Wasser-Gemisches aus dem Einspültrichter (13) in den Waschtank (16) in Abhängigkeit von der durch die Meßsonde (19) und die elektronische Regelung (20) gemessenen Waschmittelkonzentration.

6 8 5 3 2 1 20 4 10 21 22 11 9 7 16 17 12 14 19 13 18 15

1/1

0065209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 386 966 (LICENTIA) *Figur 3; Ansprüche 1,10,11; Seite 4, Zeilen 7-29* | 1,3 | D 06 F 39/02 |
| Y | US-A-2 382 648 (MARTIN) *Insgesamt* | 1,5 | |
| A | DE-A-2 423 822 (BUREL) *Seiten 1,2 and 3; Figuren* | 1,2,3 | |
| A | US-A-3 095 121 (DOUTY) *Insgesamt* | 1,5 | |
| A,D | DE-A-1 542 298 (LANG APPARATEBAU) *Figuren; Ansprüche 1,4,5* | 1,4 | |
| A | GB-A-1 501 432 (GENERAL DES ENGRAIS) *Seite 2, Zeilen 61-93* | 1-3 | |
| A | US-E- 27 681 (GADDIS) *Spalte 3, Zeilen 17-65* | 1,2 | |
| A | FR-A-1 508 839 (MAGGI) | | |
| A | GB-A-1 317 398 (KRAUSE) | | |

-/-

RECHERCHIERTE SACHGEBIETE (Int. Cl. ³)

D 06 F
A 47 L
B 01 J
C 02 B
B 65 G
B 65 D
A 01 C

Der vorliegende Recherchenbericht wurde für alle Patentansprüche erstellt.

| Recherchenort | Abschlußdatum der Recherche | Prüfer |
|---|---|---|
| DEN HAAG | 20-08-1982 | D HULSTER E.W.F. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches
Patentamt

**EUROPÄISCHER RECHERCHENBERICHT**

0065209
Nummer der Anmeldung

EP 82 10 3857

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-1 536 237  (NATTRASS) | | |
| A | CH-A-  210 938  (FALLER) | | |
| A | DE-C-  894 528  (JANSEN) | | |
| A | US-A-2 218 698  (CLARK) | | |
| A | US-A-4 076 146  (LAUSBERG) | | |
| | | | RECHERCHIERTE SACHGEBIETE (Int. Cl. 3) |

Der vorliegende Recherchenbericht wurde für alle Patentansprüche erstellt.

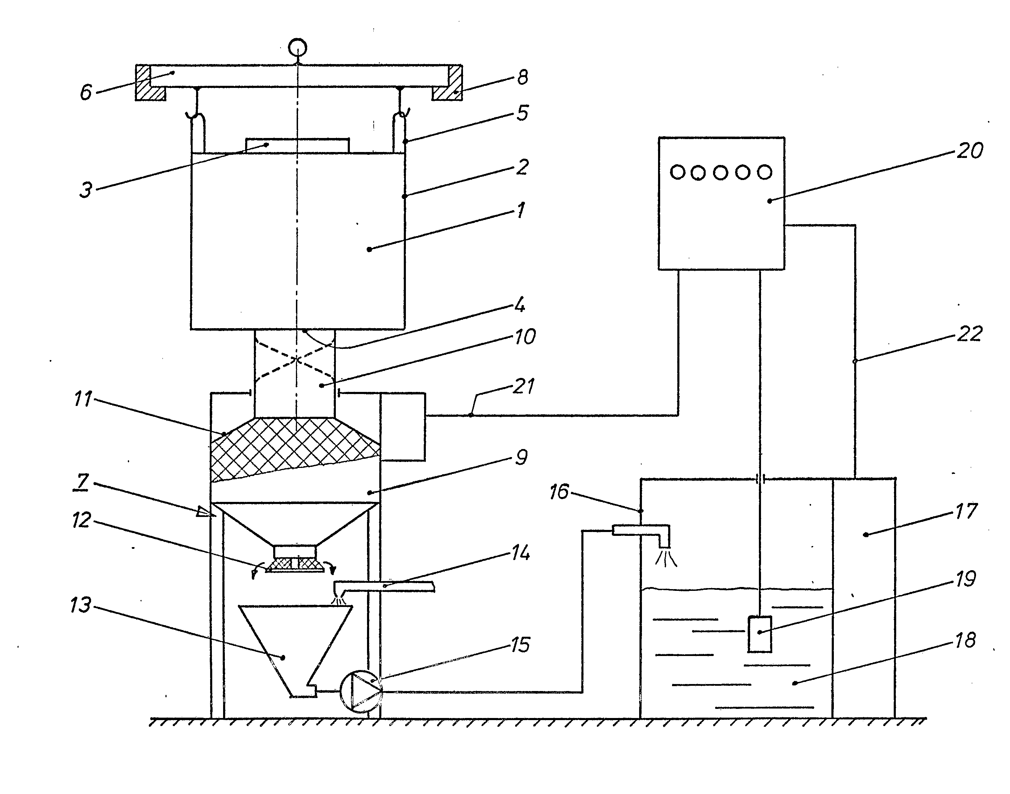

| Recherchenort DEN HAAG | Abschlußdatum der Recherche 20-08-1982 | Prüfer D HULSTER E.W.F. |
|---|---|---|